(19) Europäisches Patentamt

European Patent Office

Office européen des brevets

(11) **EP 1 065 840 A2**

(12) **EUROPEAN PATENT APPLICATION**

(43) Date of publication:
03.01.2001 Bulletin 2001/01

(51) Int. Cl.$^7$: **H04L 12/56**, H04Q 11/04

(21) Application number: 00113082.2

(22) Date of filing: 26.06.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **28.06.1999 JP 18206299**

(71) Applicant: **NEC CORPORATION**
**Tokyo (JP)**

(72) Inventor: **Yamazaki, Makoto**
**Minato-ku, Tokyo (JP)**

(74) Representative:
**VOSSIUS & PARTNER**
**Siebertstrasse 4**
**81675 München (DE)**

(54) **Compact sliding-window ATM service quality monitoring apparatus**

(57)     An ATM (Asynchronous Transfer Mode) service monitoring apparatus includes a first counter unit (1, 2), a window set counter (3), a plurality of second counters (51 ~ 5N) of the N, and a judging section (6). The first counter unit (1, 2) counts the first number of times a cell is passed and generates a first reset signal (19) to clear the first number when the first number reaches a value obtained by dividing Z (Z is a positive integer) by N (N is a positive integer). The window set counter (3) inputs the first reset signal (19) to count the second number of times the first reset signal (19) is inputted. Each of the plurality of second counters (51 ~ 5N) counts the third number of times a cell is disposed of and one of the plurality of second counters (51 ~ 5N) is reset when the second number is changed. The judging section (6) judges an ATM service quality based on the third numbers of the plurality of second counters (51 ~ 5N).

Fig. 6

EP 1 065 840 A2

## Description

The present invention relates to an ATM service quality monitoring apparatus, which judges whether or not a cell disposal rate satisfies a communication quality class requested by a user, and if it does not satisfy the requested communication quality class, reports a quality degradation to the user.

An ATM (Asynchronous Transfer Mode) communication method establishes that a user declares a band used as a traffic at a time of a call. Here, the number of cells sent out by the user is not constant. Thus, a usage parameter control (hereafter, referred to as UPC) is carried out as a function of monitoring the traffic of the user.

This UPC monitors a user cell flowing through a network. As a result of the monitor, a process for disposing of the user cell is carried out if a band equal to or greater than the declared band is used as the traffic of the user or if the network is congested.

If the cell is disposed of, the cell disposal rate is monitored. It is judged whether or not the cell disposal rate satisfies a communication quality class (request class) requested by the user. As the judged result, if the request quality is not satisfied, it is necessary to report the quality degradation to the user.

An ATM service quality monitoring apparatus is used to carry out such a process. The ATM service quality monitoring apparatus calculates the cell disposal rate, in accordance with a cell disposal report indicating that the cell disposal is performed and a cell pass report indicating that the cell is passed. The ATM service quality monitoring apparatus, if the calculated cell disposal rate exceeds a cell disposal rate of the communication quality class, reports the quality degradation to the user.

There are an allowable cell disposal rate and the like, as a parameter to define the communication quality class. The cell disposal rate indicates a probability in the cell disposal. For example, if a certain communication quality class is represented by the allowable cell disposal rate of $10^{-4}$, this implies that the communication quality class is a communication quality at which the cell disposal is allowed at a rate of one per $10^4$ cells. Typically, it implies the communication quality class having the possibility of the disposals of M cells per $M \times 10^4$ cells. Thus, the monitor of the cell disposal rate is equivalent to a monitoring whether or not (M+1) cells per $M \times 10^4$ cells are disposed of. The above-mentioned method is typically carried out in the actual process for monitoring the quality degradation. By the way, the number of cells (=M+1) serving as a standard when this quality degradation is reported is referred to as a protective step number, and a total number of monitored cells ($M \times 10^4$) is referred to as a window width Z.

A jumping-window method and a sliding window method have been well known as a method used in the monitoring method of the cell disposal rate. A cell disposal rate monitoring method done by the ATM service quality monitoring apparatus based on the above-mentioned methods will be schematically described below.

In the following explanation, it is assumed that the allowable cell disposal rate in the communication quality class is $10^{-4}$ and the protective step number (M+1) is 4. That is, the quality degradation may be reported when four cells are disposed of among $3 \times 10^4$ cells. In short, the window width Z is $3 \times 10^4$. Also, a monitor window number N is assumed to be 3 with regard to the sliding window method.

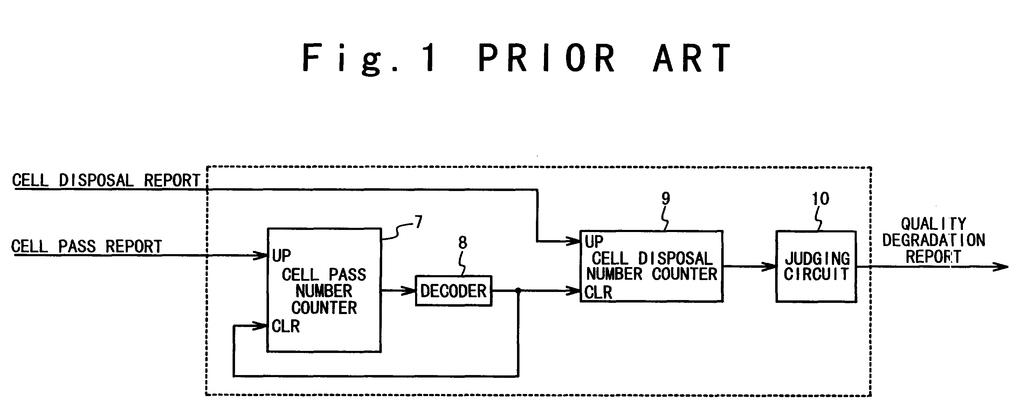

Fig. 1 is a block diagram showing the configuration of the conventional ATM service quality monitoring apparatus of the jumping-window method. This conventional ATM service quality monitoring apparatus is provided with a cell pass number counter 7, a decoder 8, a cell disposal number counter 9 and a judging circuit 10.

The cell pass number counter 7 counts up a count value by 1 for each input of the cell pass report. The cell pass number counter 7 is cleared to zero by receiving a reset report signal from the decoder 8 when the counter value of the cell pass number counter 7 becomes equal to the window width Z. Then, the count value of the cell pass number counter 7 is counted up by 1 each time the cell pass report is again inputted. The cyclic operation of that operation enables the cell pass number to be monitored. If the cell disposal rate is $10^{-4}$, the window width Z is $3 \times 10^4$. If the window width Z is $3 \times 10^4$, the cell pass number counter 7 is a 15-bit counter because of $2^{15} = 32768$.

The decoder 8, when the count value of the cell pass number counter 7 becomes equal to the window width Z, outputs the reset report signal to the cell pass number counter 7 and the cell disposal number counter 9. Accordingly, the count values of the cell pass number counter 7 and the cell disposal number counter 9 are cleared to zero.

The cell disposal number counter 9 counts up a count value by 1 for each input of the cell disposal report. The cell disposal number counter 9, when the value of the cell pass number counter 7 becomes the window width Z, receives the reset report signal from the decoder 8. Accordingly, the counter value of the cell disposal number counter 9 is cleared to zero. That is, the cell disposal number counter 9 counts the number of cell disposal by the time the cells of the Z pass.

The judging circuit 10 monitors the count value of this cell disposal number counter 9, and carries out the quality degradation report if that number agrees with the protective step number.

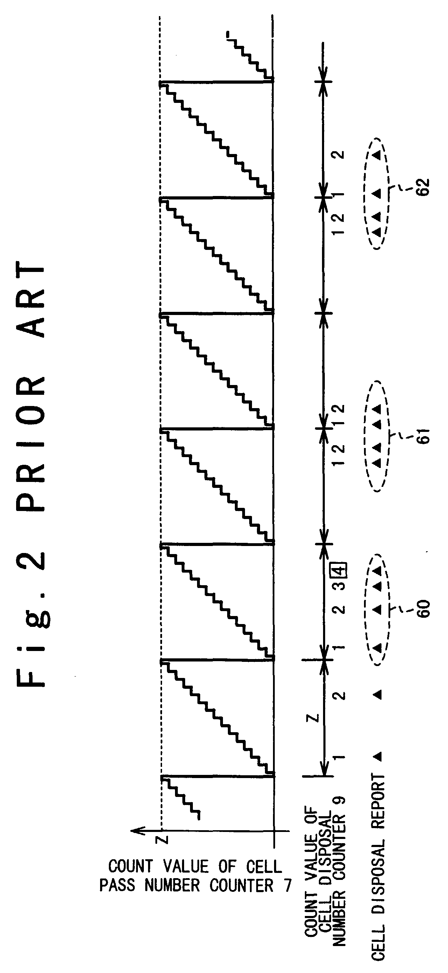

The operation of the conventional ATM service quality monitoring apparatus of the jumping-window method shown in Fig. 1 is described with reference to Fig. 2. By the way, in the count value of the cell disposal number counter 9 in Fig. 2, a numeral 4 surrounded with a quadrangle indicates that the count value reaches the protective step number and then the quality degradation report is done.

This ATM service quality monitoring apparatus of the jumping-window method can monitor the quality degradation even for a cell disposal of having any pattern, in a case of a cell disposal occurring in a window such as a quality degradation block 60. However, a monitor accuracy of the quality degradation is reduced if the cell disposal occurs in a window boundary such as quality degradation blocks 61, 62.

Even in a case of the quality degradation occurring in such the window boundary, the sliding window method is used as a method for detecting the quality degradation at a high accuracy.

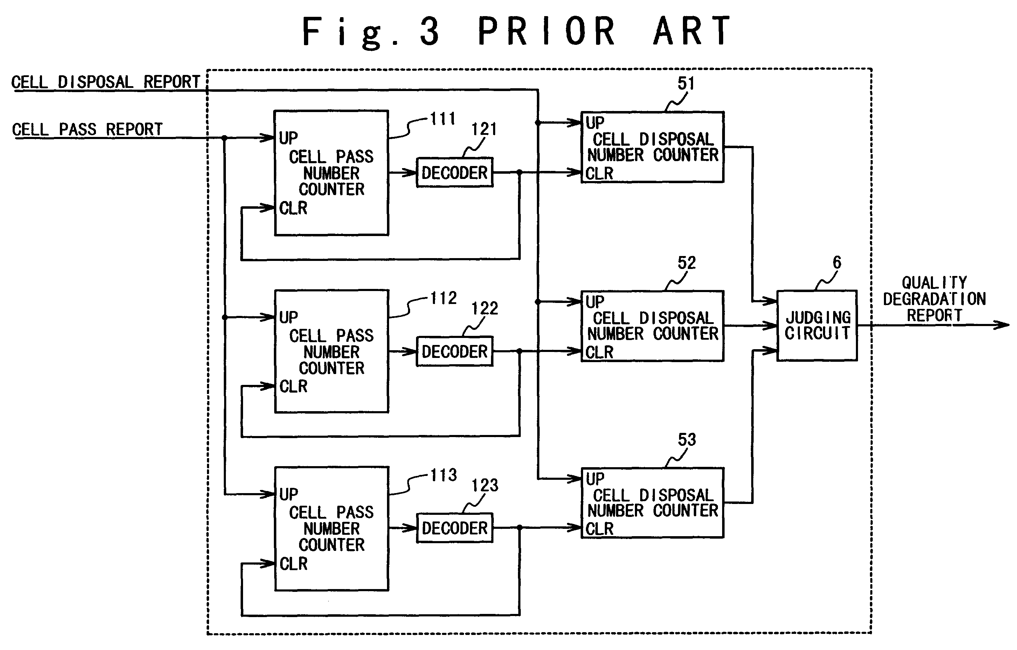

Fig. 3 shows the configuration of the conventional ATM service quality monitoring apparatus based on the sliding window method. It is described under an assumption that the monitor window number N is 3.

This conventional ATM service quality monitoring apparatus based on the sliding window method is provided with cell pass number counters 111 to 113, decoders 121 to 123, cell disposal number counters 51 to 53 and a judging circuit 6.

Each of the cell pass number counters 111 to 113 has the configuration similar to that of the cell pass number counter 7 shown in Fig. 1. Each of the decoders 121 to 123 has the configuration similar to that of the decoder 8 shown in Fig. 1. And, each of the cell disposal number counters 51 to 53 has the configuration similar to that of the cell disposal number counter 9 shown in Fig. 1.

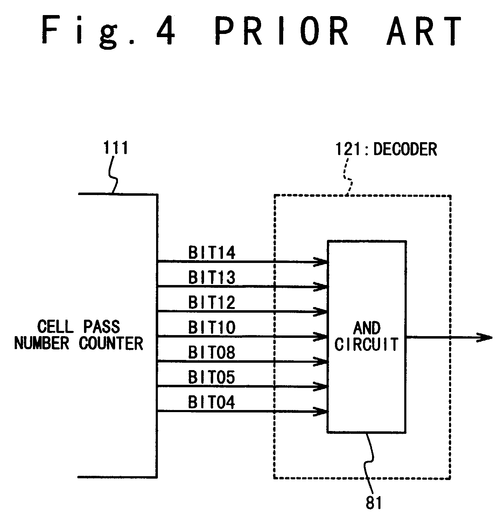

Fig. 4 shows the configuration of the decoder 121. The decoder 121 has therein an AND circuit 81 of a 7-bit input. The AND circuit 81 outputs the reset report signal to the cell disposal number counter 51, if all count values of fourth, fifth, eighth, tenth, twelfth, thirteenth and fourteenth bits among the count values represented by fifteen bits (0-th to fourteenth bits) of the cell pass number counter 111 become 1. The decoders 122, 123 also have the configuration similar to that of the decoder 121. So, the explanation is omitted.

The judging circuit 6 monitors the count values of the cell disposal number counters 51 to 53, and if any of them agrees with the protective step number, carries out the quality degradation report.

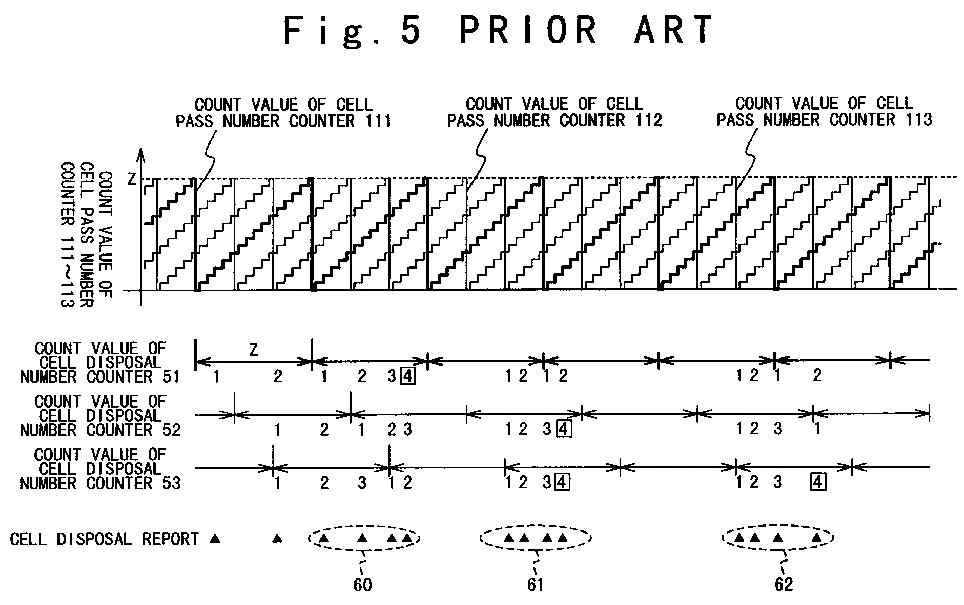

The operation of the conventional ATM service quality monitoring apparatus based on the sliding window method shown in Fig. 3 will be described below with reference to Fig. 5.

The sliding window method, since it has a plurality of cell pass number counters and a plurality of cell disposal number counters, can be regarded as a method having a plurality of stages of jumping-window methods. So its detection accuracy is higher as the monitor window number N is greater.

In this conventional ATM service quality monitoring apparatus, the counting operations of the cell pass number counters 111 to 113 are started such that the respective count values are deviated by Z/3 from each other. For this reason, as shown in Fig. 5, three windows respectively composed of the cell pass number counters 111 to 113, the decoders 121 to 123 and the cell disposal number counters 51 to 53 are set such that they are deviated by the Z/3 from each other. Accordingly, it is possible to detect the quality degradation in the blocks 61, 62 for which the jumping-window method can not the quality degradation.

As can be understood from Fig. 5, the sliding window method is effective since the sliding window method compensates the drop of the detecting accuracy on the boundary which is a defect in the jumping-window method. However, this method requires the cell pass number counters and the cell disposal number counters of the numbers corresponding to the monitor window number, for each communication quality class. As described in Fig. 3, in the case that the monitor window number is 3, the number of the cell pass number counters is three and the number of the cell disposal number counters is three. Thus, this method has a problem that a hardware size thereof becomes large.

If the cell monitoring apparatus is actually attained, the jumping-window method is inevitably unstable in accuracy. Thus, it is desirable to employ the sliding window method. However, in order to improve the accuracy by employing the sliding window method, it is necessary to prepare a large number of monitor window numbers, which results in a problem that the hardware size becomes large. Hence, it is desirable to attain the cell monitoring apparatus in a smaller hardware size.

The above-mentioned conventional ATM service quality monitoring apparatus has the problem that the hardware size is larger if the sliding window method having the plurality of windows are used in order to improve the detection accuracy of the cell disposal rate.

Japanese Laid Open Patent Application (JP-A-Heisei, 8-32591) discloses the following method and apparatus for measuring an ATM cell speed. A header information of a cell received in a cell reception buffer, after it is converted into a numeral by a converter, is stored in a header information memory, and at the same time, contents of respective window size registers constituting a window size register group and a write pointer are sequentially added by an adder. Then, it is used as a read out address. Then, all the header information of the corresponding cells are read out to ends of the respective sliding windows from the header information memory. A cell counter corresponding to the read out cell is subtracted by 1 only if each of the read out header information is not equal to the header information of the reception cell and also the window sizes of both of them agree with each other. The cell counter corresponding to the reception cell is added by 1 only if all the read out header information are not equal to the header information of the reception cell.

Japanese Laid Open Patent Application (JP-A-Heisei, 8-213987) discloses the following traffic monitor. A short period monitor parameter to monitor the fastest transfer of a cell and a middle period monitor parameter to monitor an average transfer of a cell are separately mounted as declaration parameters. Then, both the declaration parameters are used to carry out a monitor in a polishing control circuit. At this time, a RIKI bucket method using a value into which the middle period monitor parameter is converted by a parameter converter is used for the middle period monitor, and the sliding window method is used for the short period monitor.

The present invention has been made to solve the above-described problems of the conventional ATM service quality monitoring apparatus. An object of the present invention is to provide an ATM service quality monitoring apparatus which can attain a communication quality monitoring based on the sliding window method in a small hardware size. Another object of the present invention is to provide an ATM service traffic amount monitoring apparatus which can attain a traffic amount monitoring based on the sliding window method in a small hardware size.

In order to achieve an aspect of the present invention, an ATM (Asynchronous Transfer Mode) service monitoring apparatus, includes: a first counter unit counting the first number of times a cell is passed and generating a first reset signal to clear the first number when the first number reaches a value obtained by dividing Z (Z is a positive integer) by N (N is a positive integer) ; a window set counter inputting the first reset signal to count the second number of times the first reset signal is inputted; a plurality of second counters of the N, wherein each of the plurality of second counters counts the third number of times a cell is disposed of and one of the plurality of second counters is reset when the second number is changed; and a judging section judging an ATM service quality based on the third numbers of the plurality of second counters.

In this case, the ATM service monitoring apparatus is used in a sliding window method in which a plurality of cells of the Z as a window width are monitored in relation to a monitor window number of the N.

Also in this case, the judging section judges that the ATM service quality is degraded when any one of the third numbers is equal to or exceeds a protective step number.

In order to achieve another aspect of the present invention, an ATM service monitoring apparatus further includes: a decoder outputting a second reset signal to at least one of the plurality of second counters when the second number is changed, and wherein the third number is cleared in response to the second reset signal.

In this case, the decoder outputs the second reset signal of K-th (K is a positive integer variable and is equal to or less than the N) of the N to one of the K-th of the plurality of second counters when the second number is changed from (the K - 2) to (the K - 1) in case that the K exceeds 1, and outputs the second reset signal of 1-th of the N to one of the 1-th of the plurality of second counters when the second number is changed from (the N - 1) to 0 in case that the K is equal to 1.

Also in this case, the decoder outputs the second reset signal of the N-th of the N to the window set counter to clear the second number.

Further in this case, the first counter unit includes a single first counter counting the first number and a first single decoder outputting the first reset signal to the single first counter when the first number reaches the value, wherein the first number is cleared in response to the first reset signal.

In this case, the first single decoder includes an AND circuit, wherein when the AND circuit inputs all values of a plurality of selected bits of the first number to be one of 1 and 0, the AND circuit outputs the first reset signal.

Also in this case, the first counter unit counts the fourth number of times a predetermined time elapsed instead of the first number and generating a third reset signal instead of the first reset signal to clear the fourth number when the fourth number reaches a value obtained by dividing the Z by the N, and wherein the window set counter inputs the third reset signal instead of the first reset signal to count the fifth number of times the third reset signal is inputted, and wherein the each second counter counts the sixth number of times a cell is passed instead of the third number and one of the plurality of second counters is reset when the fifth number is changed, and wherein the judging section judges an ATM service traffic amount instead of the ATM service quality based on the sixth numbers of the plurality of second counters.

In order to achieve still another aspect of the present invention, an ATM service monitoring apparatus, includes: a window set counter inputting a time information report indicating that a predetermined time elapsed to count the fifth number of times the time information report is inputted; a plurality of second counters, wherein each of the plurality of second counters counts the sixth number of times a cell is passed and one of the plurality of second counters is reset when the fifth number is changed; and a judging section judging an ATM service traffic amount based on the sixth numbers of the plurality of second counters.

In order to achieve yet still another aspect of the present invention, an ATM service monitoring method, includes: (a) counting the first number of times a cell is passed; (b) generating a first reset signal to clear the first number when the first number reaches a value obtained by dividing Z (Z is a positive integer) by N (N is a positive integer); (c) inputting the first reset signal to count the second number of times the first reset signal is inputted; (d) providing a plurality of second counters of the N, wherein each of the plurality of second counters counts the third number of times a cell is disposed of and one of the plurality of second counters is reset when the second number is changed; and (e) judging an ATM service quality based on the third numbers of the plurality of second counters.

In this case, wherein the ATM service monitoring method is applied to a sliding window method in which a plurality of cells of the Z as a window width are monitored in relation to a monitor window number of the N.

Also in this case, wherein the (e) includes judging that the ATM service quality is degraded when any one of the third numbers is equal to or exceeds a protective step number.

In order to achieve yet still another aspect of the present invention, an ATM service monitoring method, further includes: (f) outputting a second reset signal to at least one of the plurality of second counters when the second number is changed, and wherein the third number is cleared in response to the second reset signal.

In this case, wherein the (f) includes outputting the second reset signal of K-th (K is a positive integer variable and is equal to or less than the N) of the N to one of the K-th of the plurality of second counters when the second number is changed from (the K -2) to (the K -1) in case that the K exceeds 1, and outputting the second reset signal of 1-th of the N to one of the 1-th of the plurality of second counters when the second number is changed from (the N -1) to 0 in case that the K is equal to 1.

Also in this case, wherein the (f) includes outputting the second reset signal of the N-th of the N to clear the second number.

Further in this case, wherein the (a) is performed by a single first counter and the (b) is performed by a first single decoder outputting the first reset signal to the single first counter when the first number reaches the value, wherein the first number is cleared in response to the first reset signal.

In this case, wherein the first single decoder includes an AND circuit, wherein when the AND circuit inputs all values of a plurality of selected bits of the first number to be one of 1 and 0, the AND circuit outputs the first reset signal.

Also in this case, wherein the (a) includes counting the fourth number of times a predetermined time elapsed instead of the first number, and wherein the (b) includes generating a third reset signal instead of the first reset signal to clear the fourth number when the fourth number reaches a value obtained by dividing the Z by the N, and wherein the (c) includes inputting the third reset signal instead of the first reset signal to count the fifth number of times the third reset signal is inputted, and wherein the (d) includes providing the plurality of second counters such that each second counter counts the sixth number of times a cell is passed instead of the third number and one of the plurality of second counters is reset when the fifth number is changed, and wherein the (e) includes judging an ATM service traffic amount instead of the ATM service quality based on the sixth numbers of the plurality of second counters.

In order to achieve another aspect of the present invention, an ATM service monitoring method, includes: (f) inputting a time information report indicating that a predetermined time elapsed to count the fifth number of times the time information report is inputted; (g) providing a plurality of second counters, wherein each of the plurality of second counters counts the sixth number of times a cell is passed and one of the plurality of second counters is reset when the fifth number is changed; and (h) judging an ATM service traffic amount based on the sixth numbers of the plurality of second counters.

In order to achieve still another aspect of the present invention, a computer readable recording medium for recording a program for a process, includes: (a) counting the first number of times a cell is passed; (b) generating a first reset signal to clear the first number when the first number reaches a value obtained by dividing Z (Z is a positive integer) by N (N is a positive integer); (c) inputting the first reset signal to count the second number of times the first reset signal is inputted; (d) providing a plurality of second counters of the N, wherein each of the plurality of second counters counts the third number of times a cell is disposed of and one of the plurality of second counters is reset when the second number is changed; and (e) judging an ATM service quality based on the third numbers of the plurality of second counters.

In this case, a computer readable recording medium for recording a program for a process, further includes: (f) outputting a second reset signal to at least one of the plurality of second counters when the second number is changed, and wherein the third number is cleared in response to the second reset signal.

Also in this case, wherein the (f) includes outputting the second reset signal of K-th (K is a positive integer variable and is equal to or less than the N) of the N to one of the K-th of the plurality of second counters when the second number is changed from (the K -2) to (the K -1) in case that the K exceeds 1, and outputting the second reset signal of 1-th of the N to one of the 1-th of the plurality of second counters when the second number is changed from (the N -1) to 0 in case that the K is equal to 1.

Further in this case, wherein the (f) includes outputting the second reset signal of the N-th of the N to clear the second number.

In this case, wherein the (a) includes counting the fourth number of times a predetermined time elapsed instead of the first number, and wherein the (b) includes generating a third reset signal instead of the first reset signal to clear the fourth number when the fourth number reaches a value obtained by dividing the Z by the N, and wherein the (c) includes inputting the third reset signal instead of the first reset signal to count the fifth number of times the third reset signal is inputted, and wherein the (d) includes providing the plurality of second counters such that each second counter counts the sixth number of times a cell is passed instead of the third number and one of the plurality of second counters is reset when the fifth number is changed, and wherein the (e) includes judging an ATM service traffic amount instead of the ATM service quality based on the sixth numbers of the plurality of second counters.

In the present invention, a window set counter counts the number that a cell pass number counter is cleared to zero. When the count value is changed, the window set counter output a second reset report signal to clear respective cell disposal number counters to zero, in turn. Thus, the respective cell disposal number counters monitor the cell disposal rate through the monitor windows different from each other. Therefore, the number of cell pass number counters corresponding to the monitor window number necessary when the sliding window method is used, can be reduced to 1, which enables an amount of necessary hardwares to be reduced.

Also, a traffic amount monitoring apparatus of the present invention is designed such that in the above-mentioned ATM service quality monitoring apparatus of the present invention, the cell pass report is used as a time information report, the cell disposal report is used as a cell pass report, and the number of arrival cells within a monitor window (within a defined time) is counted, and then if the number of arrival cells exceeds an allowable number of cells, a violation of a traffic amount is monitored.

Fig. 1 is a block diagram showing a configuration of a conventional ATM service quality monitoring apparatus of a jumping-window method;

Fig. 2 is a timing chart showing an operation of the ATM service quality monitoring apparatus of Fig. 1;

Fig. 3 is a block diagram showing a configuration of a conventional ATM service quality monitoring apparatus of a sliding window method;

Fig. 4 is a view showing a configuration of a decoder in Fig. 3;

Fig. 5 is a timing chart showing an operation of an ATM service quality monitoring apparatus in Fig. 3;

Fig. 6 is a block diagram showing a configuration of an ATM service quality monitoring apparatus in a first embodiment of the present invention;

Fig. 7 is a view showing a configuration of a first decoder in Fig. 6;

Fig. 8 is a block diagram showing a configuration of a second decoder in Fig. 6;

Fig. 9 is a timing chart showing an operation of the ATM service quality monitoring apparatus in Fig. 6;

Fig. 10 is a view showing a counter to be reset, in the ATM service quality monitoring apparatus in Fig. 6; and

Fig. 11 is a view showing hardware sizes of the ATM service quality monitoring apparatus in Fig. 6 and the ATM service quality monitoring apparatus in Fig. 3.

Embodiments of the present invention will be described below with reference to the attached drawings.

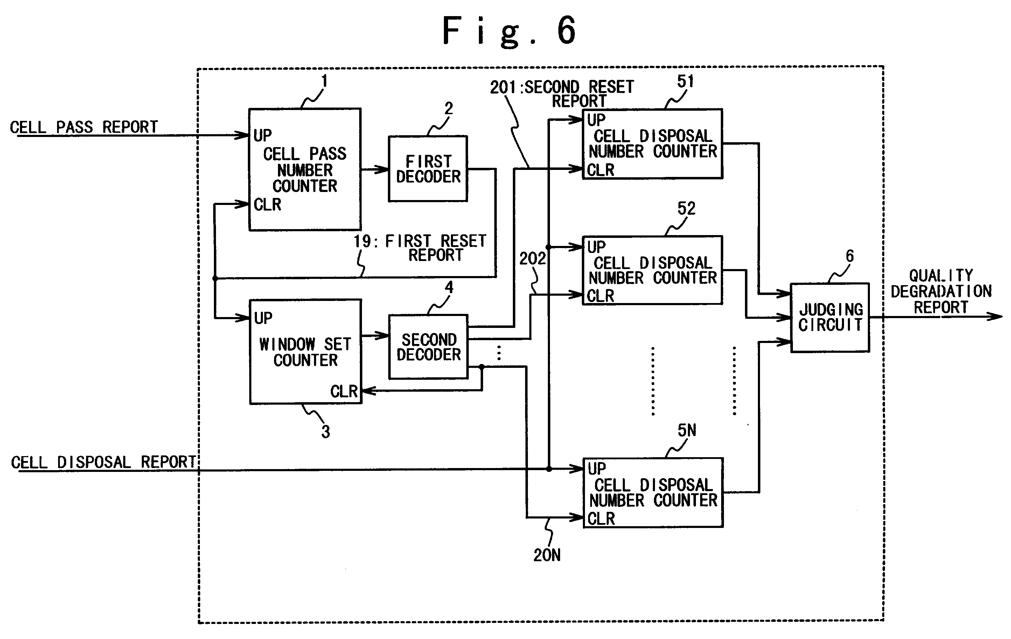

Fig. 6 is a block diagram showing the configuration of an ATM service quality monitoring apparatus in an embodiment of the present invention. The configuration components to which the same symbols as those of Fig. 3 are given denote the same configuration components.

The ATM service quality monitoring apparatus in this embodiment is the ATM service quality monitoring apparatus based on the sliding window method. It is provided with a cell pass number counter 1, a first decoder 2, a window set counter 3, a second decoder 4, N cell disposal number counters 51 to 5N and a judging circuit 6. By the way, N denotes a monitor window number.

The cell pass number counter 1 counts up a count value by 1 for each input of a cell pass report. The cell pass number counter 1 is cleared to zero, in response to a first reset report signal 19 outputted from the first decoder 2. Again, the same operation is repeated.

The first decoder 2 outputs the first reset report signal 19 to the cell pass number counter 1 and the window set counter 3 if the count value of the cell pass number counter 1 arrives (a total number of monitored cells = a window width Z)/(the monitor window number N).

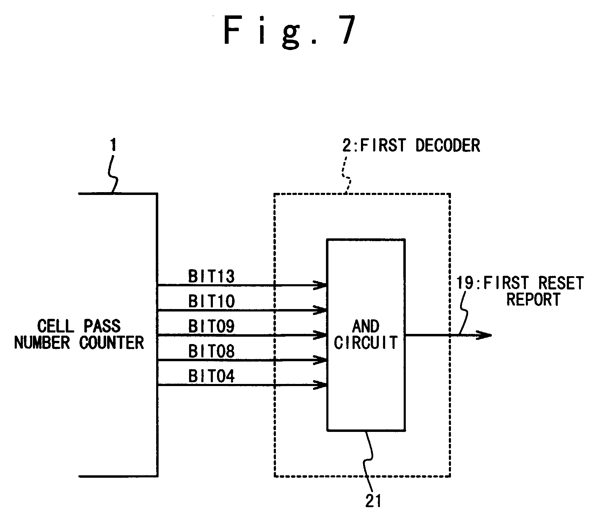

Fig. 7 shows the configuration of the first decoder 2 when the window width Z is $3 \times 10^4$ and the monitor window number N is 3. The first decoder 2 has therein an AND circuit 21 of a five-bit input. The AND circuit 21 outputs the first reset report signal 19 to the cell pass number counter 1 and the window set counter 3, if all count values of fourth, eighth, ninth, tenth and thirteenth bits among the count values represented by fourteen-bit (0-th to thirteenth bits) of the cell pass number counter 1 become 1, namely, if the count value of the cell pass number counter 1 becomes $10^4$ $(= Z/N = 3 \times 10^4/3)$.

The window set counter 3 counts up the count value by 1 for each reception of the first reset report signal 19. The window set counter 3 is cleared to zero when a second reset report signal 20N is inputted to the window set counter 3. Again, it repeats the same operation.

The cell disposal number counters 51 to 5N count up the count value by 1 for each input of a cell disposal report. The cell disposal number counters 51 to 5N are respectively cleared to zero, when the second reset report signals 201 to 20N outputted from the second decoder 4 are respectively inputted to the cell disposal number counters 51 to 5N. Again, they repeat the same operation.

The judging circuit 6 outputs a quality degradation report if any value of the count values of the cell disposal number counters 51 to 5N reaches the above-mentioned protective step number.

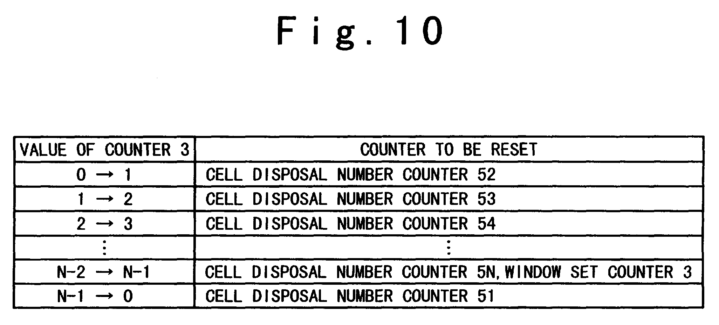

The second decoder 4 outputs one of the second reset report signals 201 to 20N to any of the window set counter 3 and the cell disposal number counters 51 to 5N, when the count value of the window set counter 3 is changed. The second reset report signals 201 to 20N are outputted in accordance with a rule shown in Fig. 10.

For example, if the monitor window number N is assumed to be 3, when the count value of the window set counter 3 is switched from 0 to 1, the second reset report signal 202 is outputted to the cell disposal number counter 52. When the count value of the window set counter 3 is switched from 1 to 2, the second reset report signal 203 is outputted to the cell disposal number counter 53 and the window set counter 3. When the count value of the window set counter 3 is switched from 2 to 0, the second reset report signal 201 is outputted to the cell disposal number counter 51. In short, the window set counter 3, when the count value of the window set counter 3 reaches (the monitor window number N - 1), is cleared to zero, in response to the second reset report signal 20N outputted from the second decoder 4.

In short, let us suppose that k is a variable of $1 \leqq k \leqq N$. Then, in a case of $1 < k \leqq N$, when the count value of the window set counter 3 is switched from (k-2) to (k-1), the second decoder 4 outputs a k-th signal (the second reset report signal 20k) among the second reset report signals 201 to 20N to the cell disposal number counter 5N. In a case of k=1, when the count value of the window set counter 3 is switched from (N-1) to 0, the second decoder 4 outputs the second reset report signal 201 to the cell disposal number counter 51.

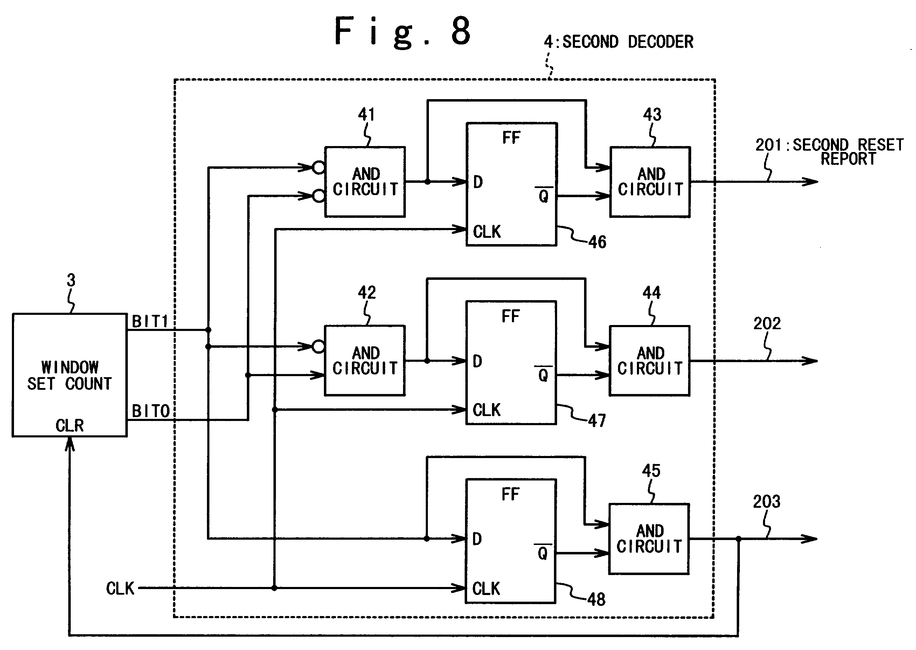

Fig. 8 shows the configuration of the second decoder 4 when the monitor window number N is 3. Referring to Fig. 8, the second decoder 4 is provided with AND circuits 41 to 45 and flip-flop circuits (FF) 46 to 48.

The AND circuit 41 carries out an logical AND operation between a value in which a first bit of the count value of the window set counter 3 is logically inverted and a value in which a 0-th bit thereof is logically inverted to output the operation result. The AND circuit 42 carries out the logical AND operation between the value in which the first bit of the count value of the window set counter 3 is logically inverted and a value of the 0-th bit thereof to output the operation result.

The AND circuit 43 carries out the logical AND operation between an output value of the AND circuit 41 and an inversion output value (/Q) of the FF 46, to output the operation result as the second reset report signal 201. The AND circuit 44 carries out the logical AND operation between an output value of the AND circuit 42 and an inversion output value of the FF 47 to output the operation result as the second reset report signal 202. And, the AND circuit 45 carries out the logical AND operation between the value of the first bit of the count value of the window set counter 3 and an inversion output value of the FF 48 to output the operation result as the second reset report signal 203.

The FF 46 receives the output signal from the AND circuit 41 to output a value in which the logic of the received signal is inverted, as an inversion output value, after one clock. The FF 47 receives the output signal from the AND circuit 42 to output a value in which the logic of the received signal is inverted, as an inversion output value, after one clock. And, the FF 48 receives the value of the first bit of the count value of the window set counter 3 to output a value in which the logic of the received signal is inverted, as an inversion output value, after one clock.

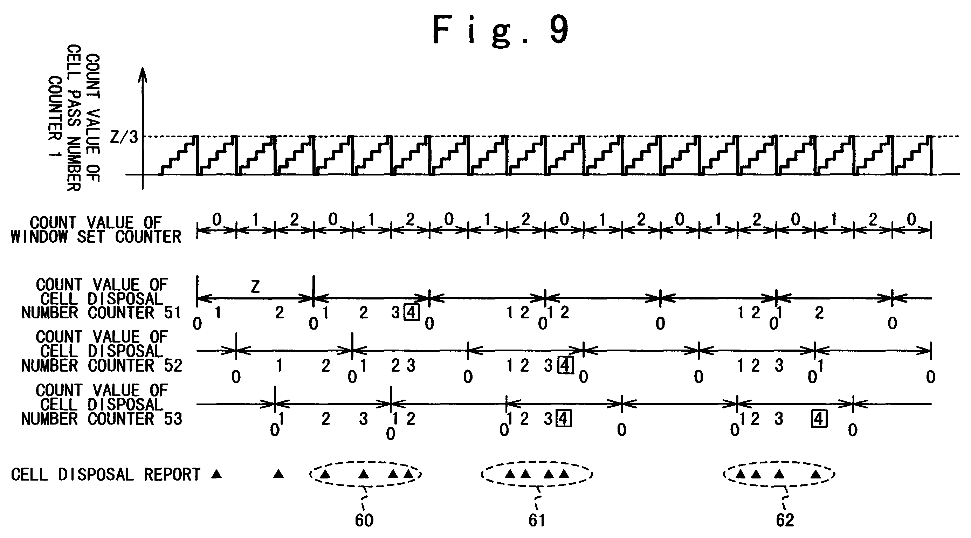

The operation of the ATM service quality monitoring apparatus in this embodiment will be described below in detail with reference to Figs. 6 to 9. Fig. 9 is a timing chart showing the operation of the ATM service quality monitoring apparatus in Fig. 6. By the way, the following explanation is done under an assumption that in a case of the cell disposal rate of $10^{-4}$, the total number of monitored cells (= the window width Z) is $3 \times 10^4$, the protective step number is 4 and the monitor window number N is 3.

The cell pass number counter 1 counts up the count value by 1 for each input of the cell pass report. When the count value of the cell pass number counter 1 reaches $10^4$ (=Z/3), it is cleared to zero in response to the first reset report signal 19 outputted from the first decoder 2. The window set counter 3 counts up the count value by 1, in time to the zero clear timing of the cell pass number counter 1. When the count value of the window set counter 3 reaches (the monitor window number N - 1), it is cleared to zero in response to the second reset report signal 203 outputted from the second decoder 4. Again, the above-mentioned operations are repeated.

The cell disposal number counter 51 counts up the count value by 1 for each input of the cell disposal report. The count value of the cell disposal number counter 51 is cleared to zero in response to the second reset report signal 201 outputted from the second decoder 4 when the count value of the window set counter 3 is switched from 2 to 0. Thus, this implies that the cell disposal number counter 51 counts the number of the input of the cell disposal report until the count value of the window set counter 3 is next switched from 2 to 0 after it is switched from 2 to 0. The number of cells passing in this period corresponds to three rounds or times of the zero clear timing of the cell pass number counter 1. Hence, the number of cells passing in the period is $3 \times 10^4$. In Fig. 9, the cell disposal number counter 51 counts the cell disposal number of 4 in a second round. Accordingly, the quality degradation report is outputted by the judging circuit 6.

The cell disposal number counters 52, 53 function similarly to the cell disposal number counter 51 except that the zero clear timing is different. As can be understood from Fig. 9, ranges monitored by the respective cell disposal number counters 51 to 53 are different from each other. It is understood that they function similarly to the sliding window method shown in Fig. 3. In view of them, it can be understood that the ATM service quality monitoring apparatus having the configuration in Fig. 6 and the ATM service quality monitoring apparatus having the configuration in Fig. 3 have the same quality monitoring performance.

Then, the ATM service quality monitoring apparatus in this embodiment attains the quality monitoring performance similar to that of the conventional ATM service quality monitoring apparatus shown in Fig. 3, in a smaller hardware size.

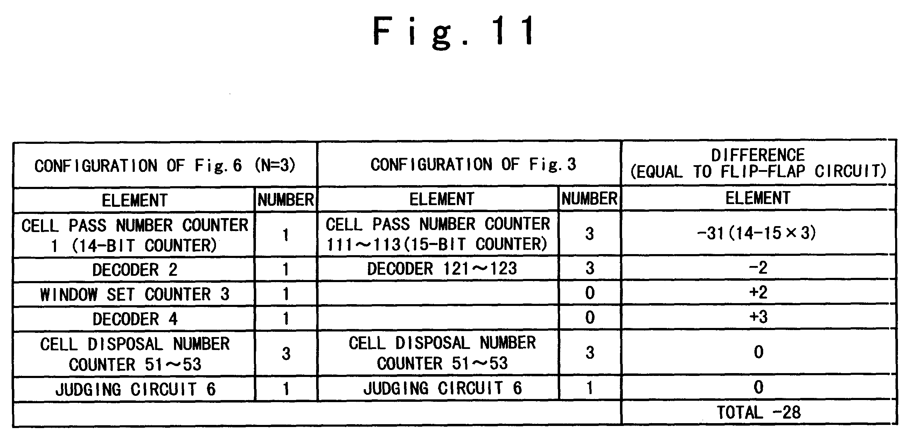

Fig. 11 shows the result when the hardware size of the ATM service quality monitoring apparatus in this embodiment shown in Fig. 6 is compared with that of the conventional ATM service quality monitoring apparatus shown in Fig. 3.

When the explanation is done from a top stage of Fig. 11, it is firstly understood that the number of cell pass number counters in this embodiment is smaller than that of the conventional configuration.

Also, It is enough that the cell pass number counter 1 in this embodiment can carry out the count operation until $10^4$ (= $3 \times 10^4/3$) if the cell disposal rate is $10^{-4}$. Thus, the cell pass number counter 1 in this embodiment is a 14-bit counter. While on the other hand, each of the cell pass number counters 111 to 113 in the conventional example is the 15-bit counter. Thus, a difference between them corresponds to 31 flip-flop circuits in terms of the FF (the flip-flop circuit).

As for the number of decoders to clear the cell pass number counter to zero, this embodiment requires only the first decoder 2. On the contrary, the conventional example requires the three decoders 121 to 123. Thus, the difference between them is 2. This difference is smaller in effect as compared with the difference between the cell pass number counters. This difference can be regarded as the result that the number of FFs is about 2 and the number of AND circuits is slightly reduced.

The window set counter 3 in this embodiment is not present in the conventional configuration of Fig. 3. It is added in this embodiment. However, the window set counter 3 is the two-bit counter. Thus, the difference is about two FFs.

The second decoder 4 is also newly added in this embodiment. However, this has little impact on the hardware size, similarly to the first decoder 2. Referring to Fig. 8, the addition amount corresponds to three FFs.

The above-mentioned explanations are summarized as follows. That is, in the configuration of the ATM service quality monitoring apparatus in this embodiment shown in Fig. 6, the hardware size thereof is smaller by an amount corresponding to about 28 flip-flop circuits than that of the conventional ATM service quality monitoring apparatus shown in Fig. 3. This implies that in the ATM service quality monitoring apparatus in this embodiment, the whole hardware size thereof can be reduced to about half that of the conventional ATM service quality monitoring apparatus.

This difference appears noticeably as the total number of monitored cells Z is greater, namely, as the cell disposal rate to be monitored is lower, or as the monitor window number N is greater, namely, as the monitor accuracy is higher. This is because those elements have influence on the upper limit of the cell pass number counter and the necessary monitor window number N which are the first factor that causes the hardware size to be larger.

From the above-mentioned explanations, it can be understood that the ATM service quality monitoring apparatus in this embodiment has the configuration in which the hardware size thereof can be reduced as compared with the conventional ATM service quality monitoring apparatus.

The above-mentioned explanations are down with regard to the monitor of the cell disposal rate. However, if under the same configuration, the cell pass report is used as the time information report indicating that a predetermined time elapsed and also the cell disposal report is used as the cell pass report, this implies the count of the number of arrival cells within the monitor window (within the defined time). So, a violation of a traffic amount can be monitored since the judging circuit 6 compares this cell number with the allowable cell number. That is, it can be applied to the traffic amount monitoring apparatus in its original state.

In this case, if the time information report can be directly entered to the window set counter 3, it can be constituted even if the cell pass number counter 1 and the first decoder 2 are not always used.

As mentioned above, the present invention has the effect that the quality monitoring apparatus based on the sliding window method can be attained in the small hardware size.

## Claims

1. An ATM (Asynchronous Transfer Mode) service monitoring apparatus, comprising:

a first counter unit (1, 2) counting the first number of times a cell is passed and generating a first reset signal (19) to clear said first number when said first number reaches a value obtained by dividing Z (Z is a positive integer) by N (N is a positive integer);
a window set counter (3) inputting said first reset signal (19) to count the second number of times said first reset signal (19) is inputted;

a plurality of second counters (51 ~ 5N) of said N, wherein each of said plurality of second counters (51 ~ 5N) counts the third number of times a cell is disposed of and one of said plurality of second counters (51 ~ 5N) is reset when said second number is changed; and

a judging section (6) judging an ATM service quality based on said third numbers of said plurality of second counters (51 ~ 5N).

2. An ATM service monitoring apparatus according to Claim 1, wherein said ATM service monitoring apparatus is used in a sliding window method in which a plurality of cells of said Z as a window width are monitored in relation to a monitor window number of said N.

3. An ATM service monitoring apparatus according to Claim 1 or 2, wherein said judging section (6) judges that said ATM service quality is degraded when any one of said third numbers is equal to or exceeds a protective step number.

4. An ATM service monitoring apparatus according to any one of Claims 1 to 3, further comprising:

a decoder (4) outputting a second reset signal (201 ~ 20N) to at least one of said plurality of second counters (51 ~ 5N) when said second number is changed, and
wherein said third number is cleared in response to said second reset signal (201 ~ 20N).

5. An ATM service monitoring apparatus according to Claim 4, wherein said decoder (4) outputs said second reset signal (201 ~ 20N) of K-th (K is a positive integer variable and is equal to or less than said N) of said N to one of said K-th of said plurality of second counters (51 ~ 5N) when said second number is changed from (said K - 2) to (said K -1) in case that said K exceeds 1, and outputs said second reset signal (201 ~ 20N) of 1-th of said N to one of said 1-th of said plurality of second counters (51 ~ 5N) when said second number is changed from (said N -1) to 0 in case that said K is equal to 1.

6. An ATM service monitoring apparatus according to Claim 5, wherein said decoder (4) outputs said second reset signal (201 ~ 20N) of said N-th of said N to said window set counter (3) to clear said second number.

7. An ATM service monitoring apparatus according to any one of Claims 1 to 6, wherein said first counter unit (1, 2) includes a single first counter (1) counting said first number and a first single decoder (2) outputting said first reset signal (19) to said single first counter (1) when said first number reaches said value, wherein said first number is cleared in response to said first reset signal (19).

8. An ATM service monitoring apparatus according to Claim 7, wherein said first single decoder (2) includes an AND circuit (21), wherein when said AND circuit (21) inputs all values of a plurality of selected bits of said first number to be one of 1 and 0, said AND circuit (21) outputs said first reset signal (19).

9. An ATM service monitoring apparatus according to any one of Claims 1 to 8, wherein said first counter unit counts the fourth number of times a predetermined time elapsed instead of said first number and generating a third reset signal Instead of said first reset signal to clear said fourth number when said fourth number reaches a value obtained by dividing said Z by said N, and
wherein said window set counter inputs said third reset signal instead of said first reset signal to count the fifth number of times said third reset signal is inputted, and
wherein said each second counter counts the sixth number of times a cell is passed instead of said third number and one of said plurality of second counters is reset when said fifth number is changed, and
wherein said judging section judges an ATM service traffic amount instead of said ATM service quality based on said sixth numbers of said plurality of second counters.

10. An ATM (Asynchronous Transfer Mode) service monitoring method, comprising:

(a) counting the first number of times a cell is passed;
(b) generating a first reset signal (19) to clear said first number when said first number reaches a value obtained by dividing Z (Z is a positive integer) by N (N is a positive integer);
(c) inputting said first reset signal (19) to count the second number of times said first reset signal (19) is inputted;
(d) providing a plurality of second counters (51 ~ 5N) of said N, wherein each of said plurality of second counters (51 ~ 5N) counts the third number of times a cell is disposed of and one of said plurality of second counters (51 ~ 5N) is reset when said second number is changed; and

(e) judging an ATM service quality based on said third numbers of said plurality of second counters (51 ~ 5N).

**11.** An ATM service monitoring method according to Claim 10, wherein said ATM service monitoring method is applied to a sliding window method in which a plurality of cells of said Z as a window width are monitored in relation to a monitor window number of said N.

**12.** An ATM service monitoring method according to Claim 10 or 11, wherein said (e) includes judging that said ATM service quality is degraded when any one of said third numbers is equal to or exceeds a protective step number.

**13.** An ATM service monitoring method according to any one of Claims 10 to 12, further comprising:

(f) outputting a second reset signal (201 ~ 20N) to at least one of said plurality of second counters (51 ~ 5N) when said second number is changed, and
wherein said third number is cleared in response to said second reset signal (201 ~ 20N).

**14.** An ATM service monitoring method according to Claim 13, wherein said (f) includes outputting said second reset signal (201 ~ 20N) of K-th (K is a positive Integer variable and is equal to or less than said N) of said N to one of said K-th of said plurality of second counters (51 ~ 5N) when said second number is changed from (said K -2) to (said K -1) in case that said K exceeds 1, and outputting said second reset signal (201 ~ 20N) of 1-th of said N to one of said 1-th of said plurality of second counters (51 ~ 5N) when said second number is changed from (said N -1) to 0 in case that said K is equal to 1.

**15.** An ATM service monitoring method according to Claim 14, wherein said (f) includes outputting said second reset signal (201 ~ 20N) of said N-th of said N to clear said second number.

**16.** An ATM service monitoring method according to any one of Claims 10 to 15, wherein said (a) is performed by a single first counter (1) and said (b) is performed by a first single decoder (2) outputting said first reset signal (19) to said single first counter (1) when said first number reaches said value, wherein said first number is cleared in response to said first reset signal (19).

**17.** An ATM service monitoring method according to Claim 16, wherein said first single decoder (2) includes an AND circuit (21), wherein when said AND circuit (21) inputs all values of a plurality of selected bits of said first number to be one of 1 and 0, said AND circuit (21) outputs said first reset signal (19).

**18.** An ATM service monitoring method, according to any one of Claims 10 to 17, wherein said (a) includes counting the fourth number of times a predetermined time elapsed instead of said first number, and
wherein said (b) includes generating a third reset signal instead of said first reset signal to clear said fourth number when said fourth number reaches a value obtained by dividing said Z by said N, and
wherein said (c) includes inputting said third reset signal instead of said first reset signal to count the fifth number of times said third reset signal is inputted, and
wherein said (d) includes providing said plurality of second counters such that each second counter counts the sixth number of times a cell is passed instead of said third number and one of said plurality of second counters is reset when said fifth number is changed, and
wherein said (e) includes judging an ATM service traffic amount instead of said ATM service quality based on said sixth numbers of said plurality of second counters.

**19.** A computer readable recording medium for recording a program for a process, comprising:

(a) counting the first number of times a cell is passed;
(b) generating a first reset signal (19) to clear said first number when said first number reaches a value obtained by dividing Z (Z is a positive integer) by N (N is a positive integer );
(c) inputting said first reset signal (19) to count the second number of times said first reset signal (19) is inputted;
(d) providing a plurality of second counters (51 ~ 5N) of said N, wherein each of said plurality of second counters (51 ~ 5N) counts the third number of times a cell is disposed of and one of said plurality of second counters (51 ~ 5N) is reset when said second number is changed; and

(e) judging an ATM service quality based on said third numbers of said plurality of second counters (51 ~ 5N).

20. A computer readable recording medium for recording a program for a process according to Claim 19, further comprising:

(f) outputting a second reset signal (201 ~ 20N) to at least one of said plurality of second counters (51 ~ 5N) when said second number is changed, and
wherein said third number is cleared in response to said second reset signal (201 ~ 20N).

21. A computer readable recording medium for recording a program for a process according to Claim 20, wherein said (f) includes outputting said second reset signal (201 ~ 20N) of K-th (K is a positive integer variable and is equal to or less than said N) of said N to one of said K-th of said plurality of second counters (51 ~ 5N) when said second number is changed from (said K -2) to (said K -1) in case that said K exceeds 1, and outputting said second reset signal (201 ~ 20N) of 1-th of said N to one of said 1-th of said plurality of second counters (51 ~ 5N) when said second number is changed from (said N -1) to 0 in case that said K is equal to 1.

22. A computer readable recording medium for recording a program for a process according to Claim 21, wherein said (f) includes outputting said second reset signal (201 ~ 20N) of said N-th of said N to clear said second number.

23. A computer readable recording medium for recording a program for a process according to any one of Claims 19 to 22, wherein said (a) includes counting the fourth number of times a predetermined time elapsed instead of said first number, and
wherein said (b) includes generating a third reset signal instead of said first reset signal to clear said fourth number when said fourth number reaches a value obtained by dividing said Z by said N, and
wherein said (c) includes inputting said third reset signal instead of said first reset signal to count the fifth number of times said third reset signal is inputted, and
wherein said (d) includes providing said plurality of second counters such that each second counter counts the sixth number of times a cell is passed instead of said third number and one of said plurality of second counters is reset when said fifth number is changed, and
wherein said (e) includes judging an ATM service traffic amount instead of said ATM service quality based on said sixth numbers of said plurality of second counters.

Fig. 1 PRIOR ART

CELL DISPOSAL REPORT

CELL PASS REPORT

UP
CELL PASS
NUMBER
COUNTER

CLR

7

DECODER

8

UP
CELL DISPOSAL
NUMBER COUNTER

CLR

9

JUDGING
CIRCUIT

10

QUALITY
DEGRADATION
REPORT

EP 1 065 840 A2

# Fig. 2 PRIOR ART

COUNT VALUE OF CELL PASS NUMBER COUNTER 7

COUNT VALUE OF CELL DISPOSAL NUMBER COUNTER 9

CELL DISPOSAL REPORT ▲

EP 1 065 840 A2

# Fig. 3 PRIOR ART

CELL DISPOSAL REPORT

CELL PASS REPORT

UP
CELL PASS
NUMBER
COUNTER
CLR
111

DECODER
121

UP
CELL DISPOSAL
NUMBER COUNTER
CLR
51

UP
CELL PASS
NUMBER
COUNTER
CLR
112

DECODER
122

UP
CELL DISPOSAL
NUMBER COUNTER
CLR
52

UP
CELL PASS
NUMBER
COUNTER
CLR
113

DECODER
123

UP
CELL DISPOSAL
NUMBER COUNTER
CLR
53

JUDGING
CIRCUIT
6

QUALITY
DEGRADATION
REPORT

EP 1 065 840 A2

# Fig. 4 PRIOR ART

111

121 : DECODER

CELL PASS
NUMBER COUNTER

BIT14
BIT13
BIT12
BIT10
BIT08
BIT05
BIT04

AND
CIRCUIT

81

# Fig. 5 PRIOR ART

COUNT VALUE OF CELL PASS NUMBER COUNTER 111

COUNT VALUE OF CELL PASS NUMBER COUNTER 112

COUNT VALUE OF CELL PASS NUMBER COUNTER 113

COUNT VALUE OF CELL PASS NUMBER COUNTER 111~113

COUNT VALUE OF CELL DISPOSAL NUMBER COUNTER 51

COUNT VALUE OF CELL DISPOSAL NUMBER COUNTER 52

COUNT VALUE OF CELL DISPOSAL NUMBER COUNTER 53

CELL DISPOSAL REPORT

60  61  62

EP 1 065 840 A2

# Fig. 6

CELL PASS REPORT →

1 — UP  CELL PASS NUMBER COUNTER  CLR

2 — FIRST DECODER

201: SECOND RESET REPORT

51 — UP  CELL DISPOSAL NUMBER COUNTER  CLR

19: FIRST RESET REPORT

202

52 — UP  CELL DISPOSAL NUMBER COUNTER  CLR

4 — SECOND DECODER

3 — UP  WINDOW SET COUNTER  CLR

6 — JUDGING CIRCUIT

QUALITY DEGRADATION REPORT →

CELL DISPOSAL REPORT →

5N — UP  CELL DISPOSAL NUMBER COUNTER  CLR

20N

EP 1 065 840 A2

# Ｆｉｇ．７

1

2:FIRST DECODER

BIT13
BIT10
BIT09
BIT08
BIT04

CELL PASS
NUMBER COUNTER

AND
CIRCUIT

19:FIRST RESET
REPORT

21

Fig. 8

4:SECOND DECODER

3 WINDOW SET COUNT / CLR

BIT1
BIT0

CLK

41 AND CIRCUIT
42 AND CIRCUIT

FF D Q̄ CLK 46
FF D Q̄ CLK 47
FF D Q̄ CLK 48

43 AND CIRCUIT — 201:SECOND RESET REPORT
44 AND CIRCUIT — 202
45 AND CIRCUIT — 203

EP 1 065 840 A2

# Fig. 9

EP 1 065 840 A2

# Fig. 10

| VALUE OF COUNTER 3 | COUNTER TO BE RESET |
|---|---|
| 0 → 1 | CELL DISPOSAL NUMBER COUNTER 52 |
| 1 → 2 | CELL DISPOSAL NUMBER COUNTER 53 |
| 2 → 3 | CELL DISPOSAL NUMBER COUNTER 54 |
| ⋮ | ⋮ |
| N-2 → N-1 | CELL DISPOSAL NUMBER COUNTER 5N, WINDOW SET COUNTER 3 |
| N-1 → 0 | CELL DISPOSAL NUMBER COUNTER 51 |

EP 1 065 840 A2

# Fig. 11

EP 1 065 840 A2

| CONFIGURATION OF Fig. 6 (N=3) | | CONFIGURATION OF Fig. 3 | | DIFFERENCE (EQUAL TO FLIP-FLAP CIRCUIT) |
|---|---|---|---|---|
| ELEMENT | NUMBER | ELEMENT | NUMBER | ELEMENT |
| CELL PASS NUMBER COUNTER 1 (14-BIT COUNTER) | 1 | CELL PASS NUMBER COUNTER 111~113 (15-BIT COUNTER) | 3 | $-31 (14-15 \times 3)$ |
| DECODER 2 | 1 | DECODER 121~123 | 3 | $-2$ |
| WINDOW SET COUNTER 3 | 1 | | 0 | $+2$ |
| DECODER 4 | 1 | | 0 | $+3$ |
| CELL DISPOSAL NUMBER COUNTER 51~53 | 3 | CELL DISPOSAL NUMBER COUNTER 51~53 | 3 | 0 |
| JUDGING CIRCUIT 6 | 1 | JUDGING CIRCUIT 6 | 1 | 0 |
| | | | | TOTAL $-28$ |